Europäisches Patentamt

European Patent Office

Office européen des brevets

(19)

(11) Publication number : **0 465 172 A1**

# (12) EUROPEAN PATENT APPLICATION

(21) Application number : **91305908.5**

(22) Date of filing : **28.06.91**

(51) Int. Cl.⁵ : **C09D 5/14**

(30) Priority : **29.06.90 GB 9014490**

(43) Date of publication of application :
**08.01.92 Bulletin 92/02**

(84) Designated Contracting States :
**AT BE CH DE DK ES FR GB GR IT LI LU NL SE**

(71) Applicant : **METALLISATION SERVICE LIMITED**
**Pear Tree Lane**
**Dudley, West Midlands DY2 0XH (GB)**

(72) Inventor : **Round, Michael John**
**120 St. Peter's Road**
**Dudley DY2 9HG (GB)**
Inventor : **Rickards, Colin**
**18 Lakeside Court Brierley Hill**
**West Midlands DY5 3RQ (GB)**

(74) Representative : **Lally, William et al**
**FORRESTER & BOEHMERT**
**Widenmayerstrasse 4/I**
**W-8000 München 22 (DE)**

(54) **Anti-biofouling composition, and method of reducing biofouling.**

(57)    A composition to be sprayed to a structure to reduce marine biofouling comprises a settable carrier material and copper or copper alloy particles, at least 50% of the copper particles having a specific area of at least 500 sq cm per gram. In this way the composition may function as an anti-biofouling layer without, or with reduced need, to abrade the surface subsequent to application.

EP 0 465 172 A1

Jouve, 18, rue Saint-Denis, 75001 PARIS

It is known to apply to a sea immersed structure (such as the legs of an oil rig or a ships hull) for the purpose of reducing biofouling, a composition comprising a settable carrier material and particulate copper. Conventionally the carrier is a thermosetting polyester resin, and the copper particles constitute typically 75 % or more of the total weight of the mixture.

Alternative to the use of copper certain copper alloys may be utilised, and the term "copper" as used herein shall be understood to include within its scope such copper alloys.

Even with such a high copper loading, it has been found necessary subsequent to applying a coating of the composition to the substrate, to abrade the surface of the applied composition, to expose copper particles to an extent sufficient to produce the desired anti-biofouling action. This is difficult, particularly in the case of structures such as oil rigs, where it may be desired to treat parts thereof to prevent biofouling.

According to this invention there is provided a method of reducing biofouling, involving the application of a mixture comprising a settable carrier and particulate copper, at least 50% of the copper particles having a specific area of at least 500 sq cm. per gram.

Preferably the copper content lies in the range 40% to 70% by weight.

It has been found that such a mixture may be applied directly to an article to be exposed to seawater, and will result in sufficient copper being exposed to avoid, or at least substantially reduce, the requirement for a specific abrading operation.

In practice it has been found that whilst the copper particles may have been coated with the carrier material, the thickness of the coating, taking into account the large surface area of the particles and the viscosity of carrier materials conventionally used, is such that the coating is very thin, and quickly becomes abraded in situ, avoiding the need to carry out a specific abrading operation.

According to this invention there is also provided a composition for reducing biofouling, comprising a carrier material and particulate copper, characterised in that:

[a] the copper particles constitute from 40% to 70% by weight of the composition;
[b] 50% of the copper particles have a specific area of at least 500 sq.cm per gram; and
[c] 90% of the copper particles have a particle size of less than 100 microns.

Preferably at least 95% of the particles have a size less than 75 microns.

Preferably the specific surface area is calculated according to Fisher, and preferably lies within the range 1000 - 4000 sq. cm per gram.

Preferably substantially all the particles have a specific surface area lying within the range specified.

In this manner it has been found that not only may the operation of abrading be largely or wholly removed, but in addition the copper loading may significantly be reduced, whilst obtaining comparable performances.

Thus preferably the mixture comprises less than 65% of copper, and a loading of less than 55% has been found to function satisfactorily.

However if the practice of partially abrading the exterior surface is acceptable, lower loadings, such as 45% by weight of copper, may be utilised with no noticeable disadvantage.

The copper particles are desirable primarily lamella in shape [i.e. in the form of platelettes], and/or dendritic.

Preferably the material is applied by a spraying operation, desirably one in which the copper particles are mixed with the carrier material, and carried onto the substrate on stream of air.

If desired the material may be applied to the substrate subsequent to the application of an intermediate coating such as a barrier coating or a primer.

According to this invention there is also provided a method of reducing biofouling, involving the application by spraying onto a substrate of a mixture comprising a carrier and copper particles, the copper particles having a specific surface area/weight ratio and being of a size such that the coating, when applied to the substrate, does not require a specific abrading operation to be carried out, to enable the coating to effect an anti-biofouling function.

Preferably the carrier is an thermosetting polyester resin material, but may be [e.g.] epoxy resins, phenolic resins, vinyl esters and the like.

## EXAMPLE

A mixture comprising polyester resin and copper particles was produced, the polyester resin constituting 45% by weight of the mixture and the copper constituting 55% by weight. The copper particles were provided as lamella particles having a specific surface area according to Fisher of between 2000 to 4000 cm per sq. gram, and having greater than 98% of the particles less than 100 microns in size. A substrate in the form of a steel plate was cleaned and a glass-filled vinyl ester primer applied to the substrate. Methylethyl ketone peroxide catalyst was then added to the mixture in a quantity of 2% by weight, and the catalysed mixture was sprayed onto the primed substrate to provide a uniform coating to a depth of approximately 500 microns.

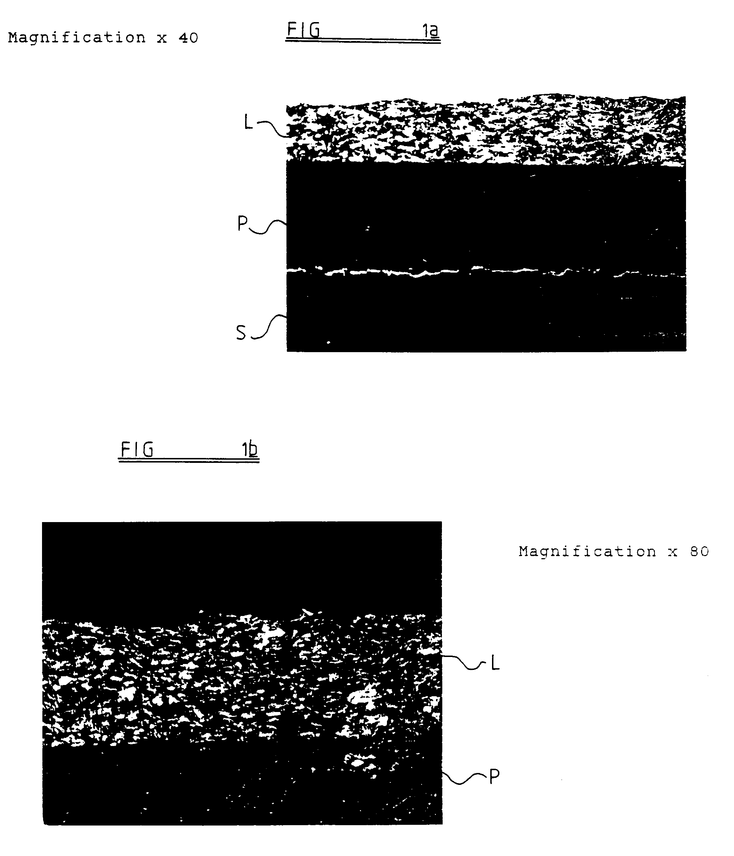

FIGURE 1a is a view of the substrate to which the coating has been applied, subsequent to completion of curing of the resin material, from which it will be observed that copper particles are visible, and hence accessible, to effect an anti-biofouling action, the substrate being indicated S, the primer P and the anti-biofouling layer L. Upon further magnification [Figure 1b] it was determined that whilst some of the copper particles were in fact coated with polyester resin, such coating was found to have no significant effect in the provision of the anti-biofouling function.

The features disclosed in the foregoing description, or the following claims, or the accompanying drawings, expressed in their specific forms or in the terms or means for performing the desired function, or a method or process for attaining the disclosed result, may, separately or in any combination of such features, be utilised for realising the invention in diverse forms thereof.

## Claims

1.  A method of reducing biofouling, involving the application of a mixture comprising a settable carrier and particulate copper, at least 50% of the copper particles having a specific area of at least 500 sq cm. per gram.

2.  A method according to Claim 1 wherein the copper content lies in the range 40% to 70% by weight of the composition.

3.  A method according to one of Claims 1 and 2 wherein at least 90% of the particles have a size less than 100 microns.

4.  A composition for reducing biofouling, comprising a carrier material and particulate copper, characterised in that:
    [a] the copper particles constitute 40% to 70% by weight of the composition;
    [b] 50% of the copper particles have a specific area of at least 500 sq.cm per gram; and
    [c] the copper particles have a particle size such that 90% of the particles are less than 100 microns.

5.  The invention according to any one of the preceding claims wherein the specific area is calculated according to Fisher, and lies within the range 1000 - 4000 sq.cm. per gram.

6.  The invention according to any one of the preceding claims wherein the mixture comprises from 45% to 65% by weight of copper.

7.  The invention according to any one of the preceding claims wherein the copper particles are primarily lamella in shape, and/or dendritic.

8.  The invention according to any preceding claims appendent to Claim 3 wherein the material is applied by a spraying operation.

9.  The invention according to Claim 7 wherein the mixture is applied to the structure on a stream of air.

10. A method of reducing biofouling, involving the application by spraying onto a substrate of a mixture comprising a carrier and copper particles, the copper particles having a specific surface area/weight ratio, and being of a size such that the coating, when applied to the substrate, does not require a specific abrading operation to be carried out, to enable the coating to effect an anti-biofouling function.

11. The invention according to any one of the preceding claims wherein the carrier is selected from the group comprising thermosetting polyester resins, epoxy resins, phenolic resins and vinyl esters.

Magnification x 40

<u>F I G</u>          <u>1a</u>

<u>F I G</u>          <u>1b</u>

Magnification x 80

EP 0 465 172 A1

# EUROPEAN SEARCH REPORT

European Patent Office

Application Number

EP    91 30 5908

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-254 164 (THE PERKIN-ELMER CORP.)<br>* claims 1,2,6-8,13,19 *<br>----- | 1-4,6-11 | C09D5/14 |
|  |  |  | **TECHNICAL FIELDS SEARCHED (Int. Cl.5)**<br><br>C09D |

The present search report has been drawn up for all claims

| Place of search | Date of completion of the search | Examiner |
|---|---|---|
| THE HAGUE | 14 OCTOBER 1991 | GIRARD Y.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

5